# EUROPEAN PATENT APPLICATION

(11) **EP 4 715 672 A1**
(43) Date of publication of application: **25.03.2026**
(21) Application number: 25203466.5
(22) Date of filing: 19.09.2025
(51) Int. Cl.: G06N 3/045, G06N 20/00

(54) **SYSTEMS AND METHODS FOR ON-DEVICE ARTIFICIAL INTELLIGENCE**

(30) Priority: 19.09.2024 US 202418890586
(71) Applicant: Google LLC, Mountain View, CA 94043 (US)
(72) Inventor: WANG, Bo, Mountain View, 94043 (US); APOSTOLOPOULOS, John George, Mountain View, 94043 (US); LIU, Lixia, Mountain View, CA (US)
(74) Representative: Shipp, Nicholas

(57) **Abstract**

A method for on-device artificial intelligence (AI) includes obtaining, at a client device, a request to perform a task. The method includes providing the request as input to a generative AI model operating on the client device. The generative AI model may be trained to identify one or more applications capable of performing the task and to generate instructions related to the task for the one or more applications. The method includes causing the instructions related to the task to be provided to the one or more applications. The method includes receiving an indication of completion of at least a portion of the task. The method includes providing, at the client device, information regarding the completion of the at least a portion of the task.

## Description

### TECHNICAL FIELD

The instant specification generally relates to computing devices. More specifically, the instant specification relates to systems and methods for on-device artificial intelligence.

### BACKGROUND

Artificial intelligence (AI) has revolutionized various technological fields by enabling computing models to learn and perform tasks that traditionally required human intelligence. In addition to AI models learning to find patterns, make predictions, and other tasks, AI models can also generate materials, including text, images, and even computer code.

### SUMMARY

Disclosed herein are systems and methods for on-device artificial intelligence. One aspect of the disclosure includes a method. The method includes obtaining, at a client device, a request to perform a task. The method includes providing the request as input to a generative artificial intelligence (AI) model operating on the client device. The generative AI model may be trained to identify one or more applications capable of performing the task and to generate instructions related to the task for the one or more applications. The method includes causing the instructions related to the task to be provided to the one or more applications. The method includes receiving an indication of completion of at least a portion of the task. The method includes providing, at the client device, information regarding the completion of the at least a portion of the task.

Another aspect of the disclosure includes a system. The system includes a memory and a processing device coupled to the memory. The processing device is configured to perform operations. The operations include obtaining, at a client device, a request to perform a task. The operations include providing the request as input to a generative AI model operating on the client device. The generative AI model may be trained to identify one or more applications capable of performing the task and to generate instructions related to the task for the one or more applications. The operations include causing the instructions related to the task to be provided to the one or more applications. The operations include receiving an indication of completion of at least a portion of the task. The operations include providing, at the client device, information regarding the completion of the at least a portion of the task.

Another aspect of the disclosure includes a non-transitory computer-readable storage medium with executable instructions. The instructions, when executed by a processing device, causes the processing device to perform operations. The operations include obtaining, at a client device, a request to perform a task. The operations include providing the request as input to a generative AI model operating on the client device. The generative AI model may be trained to identify one or more applications capable of performing the task and to generate instructions related to the task for the one or more applications. The operations include causing the instructions related to the task to be provided to the one or more applications. The operations include receiving an indication of completion of at least a portion of the task. The operations include providing, at the client device, information regarding the completion of the at least a portion of the task.

### BRIEF DESCRIPTION OF THE DRAWINGS

Aspects and implementations of the present disclosure will be understood more fully from the detailed description given below and from the accompanying drawings of various aspects and implementations of the disclosure, which, however, should not be taken to limit the disclosure to the specific aspects or implementations, but are for explanation and understanding only.
**FIG.** 1 schematically illustrates an example system for on-device artificial intelligence (AI) in which one or more aspects of the present disclosure may be implemented, in accordance with one or more embodiments.
**FIG. 2** schematically illustrates an example AI training subsystem in which one or more aspects of the present disclosure may be implemented, in accordance with one or more embodiments.
**FIG. 3** schematically illustrates an example AI inference subsystem in which one or more aspects of the present disclosure may be implemented, in accordance with one or more embodiments.
**FIG. 4** depicts a flowchart illustrating an example method for practicing some aspects of the present disclosure, in accordance with one or more embodiments.
**FIG. 5** depicts a sequence diagram illustrating an example flow of data for on-device AI, in accordance with some implementations of the present disclosure.
**FIG. 6** depicts a sequence diagram illustrating an example flow of data for on-device AI, in accordance with some implementations of the present disclosure.
**FIG. 7** depicts a sequence diagram illustrating an example flow of data for on-device AI, in accordance with some implementations of the present disclosure.
**FIG. 8** depicts a sequence diagram illustrating an example flow of data for on-device AI, in accordance with some implementations of the present disclosure.
**FIG. 9** depicts a sequence diagram illustrating an example flow of data for on-device AI, in accordance with some implementations of the present disclosure.
**FIG. 10** schematically illustrates an example system for on-device AI in which one or more aspects of the present disclosure may be implemented, in accordance with one or more embodiments.
**FIG. 11** depicts a sequence diagram illustrating an example flow of data for on-device AI, in accordance with some implementations of the present disclosure.
**FIG. 12** depicts a block diagram of an example computer device capable of on-device AI, in accordance with some implementations of the present disclosure.

### DETAILED DESCRIPTION

Computer devices can use artificial intelligence (AI) models to perform many computational tasks. Such tasks can include finding patterns and making predictions. Generative AI models can generate new materials, including text, images, audio, and computer code. AI is applicable in a wide variety of computer applications, including email, word processing, cloud storage, and computer security.

At times, it can be advantageous to run AI models on a smaller computing device (e.g., a mobile device, a personal desktop computer, a laptop computer, etc.) rather than on server devices. The server devices would not need as many computing resources (e.g., processing device resources, memory resources, data storage resources, etc.) to support executing AI models on the smaller devices. Additionally, there is less potential for abuse of the server devices when the AI models run on the smaller devices. Lastly, running the AI models on the smaller devices would allow the smaller devices to forgo sending data to be processed by the AI models over a network and would forgo processing or storing data on a server, which would increase the security of the data and reduce network and server usage.

However, in order to perform their tasks, AI models often consume large amounts of computational resources. As a consequence, using a large amount of computational resources often leads to the computing devices that run these AI models consuming a large amount of electricity. Because of the substantial consumption of resources by AI models, the AI models that can be executed on smaller computing devices are limited. Furthermore, a smaller device's available computing resources may change, for example, because other applications run on the smaller device, leaving fewer resources available for the AI models. Additionally, AI models running on smaller devices should be downloaded to the devices ahead of time and are subject to examination or analysis by other software on the smaller devices.

Because of the many disadvantages of running AI models on a small computing device, many platforms run AI models on server devices. However, this approach presents several disadvantages as well. For example, the server devices need additional infrastructure to support constantly executing the AI models, there is a potential for abuse of the server devices, and there is an increased use of server computing resources and server network resources to send data to and from the server devices. Additionally, the server devices cannot process data that has been encrypted by the smaller devices (e.g., data that should be encrypted because of privacy laws and regulations).

Aspects and implementations of the present disclosure address the above deficiencies, among others, by providing systems and methods that determine which tasks can be performed by AI models on a smaller client device and which tasks can be performed by AI models on a server device. A client device can obtain a request to perform a task. The task may include a task related to a virtual meeting being currently conducted between a user of the client device and other users. The client device can provide the request as input to an AI model operating on the client device. The AI model can be trained to identify one or more applications capable of performing the task and to generate instructions related to the task for the application(s). Once the AI model generates instructions related to the task for one or more applications, the client device can identify which of these applications are hosted at the client device and which of the applications are hosted at a server device. The client device may include functionality to determine, based on a variety of factors, which instructions to provide to on-device applications and which instructions to provide to applications executing on the server device. The client device may receive an indication that an application has performed at least part of the task, and the client device may provide information regarding performance of that part of the task (e.g., to the user of the client device).

Some benefits of the present disclosure may provide a technical effect caused by or resulting from a technical solution to a technical problem. For example, one technical problem may relate to the unavailability of client device computing resources, either because the client device is not equipped with the needed resources or because other applications running on the client device are using the client resources. One of the technical solutions to the technical problem may include determining which portions of a task can be performed by AI applications running on a server device. As a consequence, the consumption of computing resources on the client device is reduced or eliminated. Another technical problem can relate to the need of server devices to have computing resources to handle a large amount of AI tasks. One of the technical solutions may include determining which portions of the AI tasks can be performed by AI models on client devices. As a consequence, the consumption of computing resources on the server devices is reduced or eliminated.

Another technical problem may relate to problems related to sending data stored on a client device over a network to a server device for use in performing AI tasks (e.g., data privacy concerns, increased network usage, network latency). A technical solution may include determining that a portion of the AI tasks can be performed by an AI model on the client device, forgoing the need to send the data over a network to the server device and allowing users to rely on client devices and even perform AI tasks when the client device does not have a network connection to a server. Furthermore, where the data to be processed is stored on a client device, sometimes processing the data on the smaller device can be faster than sending the data to a server device, processing the data on the server device, and receiving the processed data from the server device at the client device. As a consequence, the problems related to sending the data over the network are reduced or eliminated.

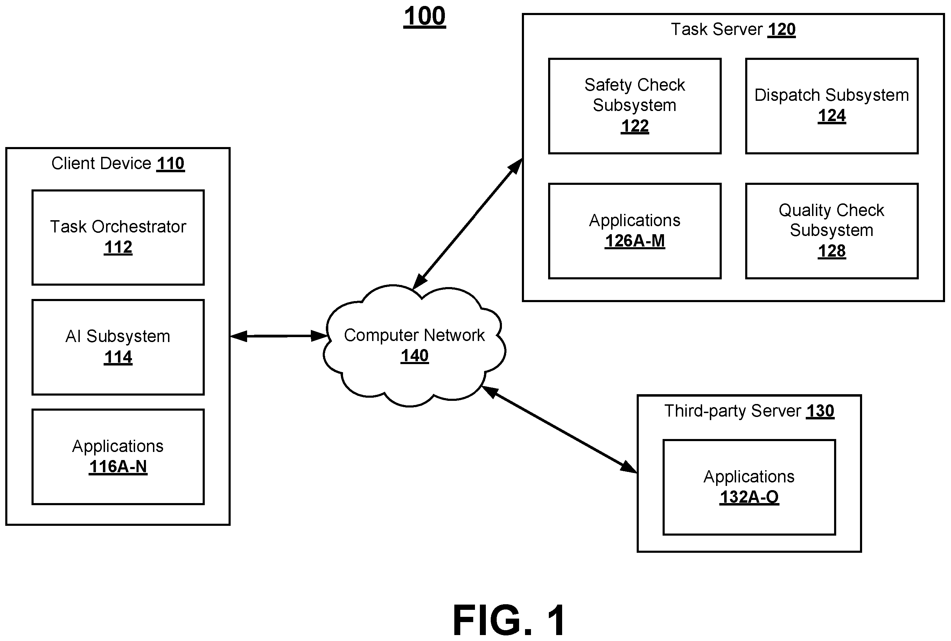

**FIG. 1** schematically illustrates an example system 100 for on-device AI in which one or more aspects of the present disclosure can be implemented, in accordance with one or more embodiments. The system 100 may include a client device 110, a task server 120, a third-party server 130, or a computer network 140. The client device 110 may include a task orchestrator 112, an AI subsystem 114, or one or more applications 116A-N. The task server 120 may include a safety check subsystem 122, a dispatch subsystem 124, one or more applications 126A-M, or a quality check subsystem 128. The third-party server 130 may include one or more applications 132A-O.

In one or more implementations, the client device 110 may include a computing device. In some implementations, a computing device includes a physical computing device or a virtualized component, such as a virtual machine (VM) or a container. A computing device may include an instance of a computing device. An instance of a computing device may include a spun-up instance that may not be specific to any computing device. In some implementations, a VM may include a system virtual machine, which may include a VM that emulates an entire physical computing device. A VM can include a process virtual machine, which may include a VM that emulates an application or some other software. A container may include a computing environment that logically surrounds one or more software applications independently of other applications executing in the cloud computing environment.

The client device 110 may include a desktop computer, a laptop computer, a mobile device (e.g., a smartphone or tablet computer), or another type of computing device. A user of the client device 110 can use the client device 110 to perform different tasks. In implementations of the disclosure, a "user" can be represented as a single individual. However, other implementations of the disclosure encompass a "user" being an entity controlled by a set of users or an organization and/or an automated source such as a system or a platform. In situations in which the systems discussed here collect personal information about users, or can make use of personal information, the users can be provided with an opportunity to control whether the client device 110, task server 120, or third-party server 130 collect user information (e.g., information about a user's social network, social actions or activities, profession, a user's preferences, or a user's current location), or to control whether and/or how to receive content from the client device 110, task server 120, or third-party server 130 that can be more relevant to the user. In addition, certain data can be treated in one or more ways before it is stored or used, so that personally identifiable information is removed. For example, a user's identity can be treated so that no personally identifiable information can be determined for the user, or a user's geographic location can be generalized where location information is obtained (such as to a city, ZIP code, or state level), so that a particular location of a user cannot be determined. Thus, the user can have control over how information is collected about the user and used by the client device 110, task server 120, or third-party server 130.

In one implementation, the task orchestrator 112 includes software (e.g., an application, service, firmware, or other software), hardware (e.g., a microprocessor, circuit, or other hardware), or a combination of hardware and software configured to determine which portions of a task can be performed by one or more AI models executing on the client device 110 and which portions of the tasks can be performed by one or more AI models executing on the task server 120 or the third-party server 130). The task orchestrator 112 can obtain a request for a task to be performed, formulate an input for an AI model of the AI subsystem 114, provide the input to the AI subsystem 114, and obtain an output from the AI subsystem 114. The output may include one or more instructions, related to the task, to be provided to one or more applications 116A-N, 126A-M, or 132A-O. The task orchestrator 112 can determine which applications 116A-N, 126A-M, 132A-O are to receive which instructions and can cause the respective instructions to be provided to the determined applications 116A-N, 126A-M, 132A-O. The task orchestrator 112 can obtain indications from the applications 116A-N, 126A-M, 132A-O regarding the task (e.g., an indication that an application 116A-N, 126A-M, 132A-O has completed its portion of the task, an output of the application 116A-N, 126A-M, 132A-O, or an error message from the application 116A-N, 126A-M, 132A-O). In some implementations, discussed below, the task orchestrator 112 is located on the task server 120.

In some implementations, the AI subsystem 114 includes software, hardware, or a combination of hardware and software configured to operate one or more AI models. The AI subsystem 114 can obtain input for an AI model, provide the input to an AI model, cause the AI model to process the input and generate an output, and provide the output to another component of the client device 110 (e.g., the task orchestrator 112 or an application of the one or more applications 116A-N). The AI subsystem 114 can manage one or more of the AI models.

In one or more implementations, the one or more applications 116A-N may include software that executes on the client device 110. An application 116A-N may include a mobile application, software installed on the client device 110, or other types of applications. An application 116A-N can obtain an instruction from the task orchestrator 112, process the instruction, and provide an indication to the task orchestrator 112 (e.g., an output generated by the application, an indication that the application has completed a portion of a task, or an error message). In some implementations, an application 116A-N may include an AI model or can use an AI model of the AI subsystem 114 to process the instruction or perform a portion of a task.

In one implementation, the task server 120 includes an application server, web server, or another type of computing device. The task server 120 may include safety check subsystem 122. The safety check subsystem 122 may include hardware, software, or a combination of hardware and software configured to determine if a portion of input is unsafe and should not be processed by one or more applications 116A-N, 126A-M, 132A-O. The input may include text, audio, or image provided by a user of the client device 110 into an application 116A-N, 126A-M, 132A-O. The input may include an output of an application 116A-N, 126AM, 132A-O. The input may be unsafe if the input contains material that can endanger people or property (e.g., a request for instructions on how to construct an explosive device or the instructions themselves) or that can cause offense (e.g., contains discriminatory material). In some implementations, the task orchestrator 112 provides input to the safety check subsystem 122, and the safety check subsystem 122 provides an output to the task orchestrator 112 indicating whether the input is safe. In one or more implementations, the safety check subsystem 122 is located on the client device 110.

In one implementation, the dispatch subsystem 124 includes hardware, software, or a combination of hardware and software configured to provide instructions to the one or more applications 126A-M, 132A-O. The dispatch subsystem 124 can obtain one or more instructions from the task orchestrator 112 and determine, for each instruction, which application 126A-M, 132A-O to send the instruction to. The dispatch subsystem 124 can obtain an indication (e.g., an output, an indication of a completion of a portion of a task, or an error message) from an application 126A-M, 132A-O, and the dispatch subsystem 124 can provide the indication to the task orchestrator 112.

In some implementations, the one or more applications 126A-M include software that executes on the task server 120. The one or more applications 126A-M may be similar to the one or more applications 116A-N of the client device 110 and, in some cases, may include some of the same applications. However, some of the applications 126A-M of the task server 120 may have different capabilities than the capabilities of the applications 116A-N of the client device 110 (e.g., because the task server 120 may have more computing resources than the client device 110). For example, the one or more applications 116A-N of the client device 110 may include an email application 116A, and the one or more applications 126A-M of the task server 120 may include the same email application 126A. The email application 126A, however, may include AI capabilities while the email application 116A may not include AI capabilities.

The quality check subsystem 128 may include hardware, software, or a combination of hardware and software configured to determine if an input to the quality check subsystem 128 is above a threshold quality. The input may include an output of an application 116A-N, 126AM, 132A-O. A quality of the input may include a factual accuracy of the input. In some implementations, the quality check subsystem 128 uses an AI model to determine a quality level of the input.

In one implementation, the third-party server 130 includes an application server, web server, or some other type computing device. The third-party server 130 may include a server that is operated by an entity that is separate from the entity that operates the task server 120. The third-party server 130 may include one or more applications 132A-O. The one or more applications 132A-O may include software that executes on the third-party server 130. The one or more applications 132A-O may be similar to the one or more applications 116A-N of the client device 110 or the one or more applications 126A-M of the task server 120 and, in some cases, may include some of the same applications. However, in some implementations, some of the applications 132A-O of the third-party server 130 are not included with the one or more applications 116A-N of the client device or the one or more applications 126A-M of the task server 120.

In some implementations, the computer network 140 includes a data communications network, which may include the Internet, a local area network (LAN), wide area network (WAN), or some other type of network. The client device 110, the task server 120, or the third-party server 130 may be in data communication with each other over the computer network 140.

In some implementations, the task server 120 and/or the third-party server 130 are part of a virtual meeting platform. The virtual meeting platform can enable users of one or more of the client devices 110 to connect with each other in a virtual meeting. The virtual meeting platform can allow users of the one or more client devices 110 to request tasks related to a virtual meeting. A virtual meeting can refer to a real-time communication session, such as a video-based call or video chat, in which participants can connect with multiple additional participants in real-time and be provided with audio and video capabilities. A virtual meeting may include an audio-based call or chat, in which participants connect with multiple additional participants in real-time and are provided with audio capabilities. Real-time communication refers to the ability for users to communicate (e.g., exchange information) instantly without transmission delays and/or with negligible (e.g., milliseconds or microseconds) latency. A user of a client device 110 may request a task during the virtual meeting, before the virtual meeting begins (e.g., as a user of the client device 110 is about to join the virtual meeting) or after the virtual meeting ends (e.g., by as a user of the client device 110 who participated in the virtual meeting). Examples of tasks related to a virtual meeting may include summarizing the discussion of the virtual meeting, generating notes based on the discussion of the virtual meeting, identifying action items discuss during the virtual meeting, enhancing a user of a client device's 110 visual background displayed during the virtual meeting, real-time translation of the discussion of the virtual meeting from a first language to a second language, or other virtual meeting-related tasks.

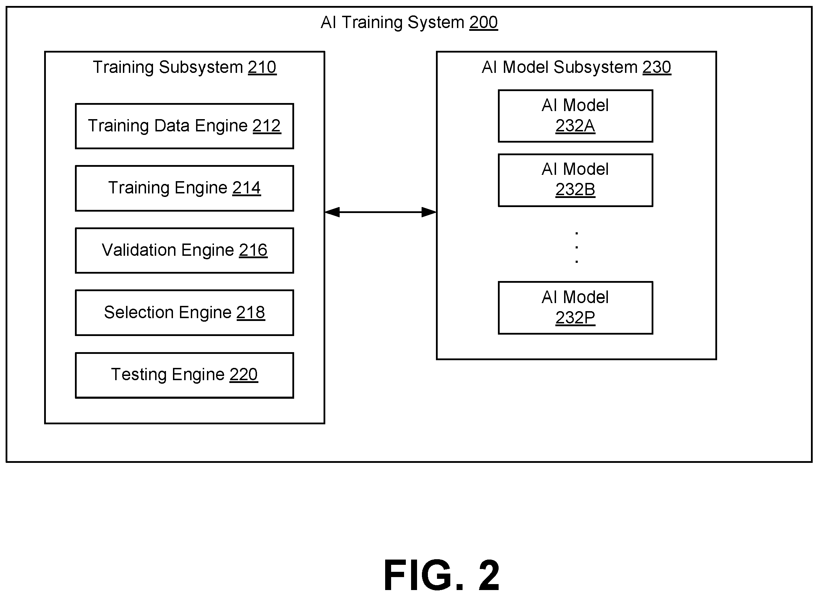

**FIG. 2** illustrates an example AI training system 200, in accordance with implementations of the present disclosure. As illustrated in **FIG. 2**, the AI training system 200 may include a training subsystem 210, which may include a training data engine 212, a training engine 214, a validation engine 216, a selection engine 218, or a testing engine 220. The AI training system 200 may include an AI model subsystem 230. The AI model subsystem 230 may include one or more AI models 232A-P.

In one implementation, an AI model 232A-P includes one or more of artificial neural networks (ANNs), decision trees, random forests, support vector machines (SVMs), clustering-based models, Bayesian networks, transformers, mixtures of experts (MoEs), or other types of machine learning models. ANNs generally include a feature representation component with a classifier or regression layers that map features to a target output space. The ANN can include multiple nodes ("neurons") arranged in one or more layers, and a neuron can be connected to one or more neurons via one or more edges ("synapses"). The synapses can perpetuate a signal from one neuron to another, and a weight, bias, or other configuration of a neuron or synapse can adjust a value of the signal. Training the ANN may include adjusting the weights or other features of the ANN based on an output produced by the ANN during training.

An ANN may include, for example, a convolutional neural network (CNN), recurrent neural network (RNN), or a deep neural network. A CNN, a specific type of ANN, hosts multiple layers of convolutional filters. Pooling is performed, and non-linearities may be addressed, at lower layers, on top of which a multi-layer perceptron is commonly appended, mapping top layer features extracted by the convolutional layers to decisions (e.g., classification outputs). A deep network may include an ANN with multiple hidden layers or a shallow network with zero or a few (e.g., 1-2) hidden layers. Deep learning is a class of machine learning algorithms that use a cascade of multiple layers of nonlinear processing units for feature extraction and transformation. Each successive layer uses the output from the previous layer as input. An RNN is a type of ANN that includes a memory to enable the ANN to capture temporal dependencies. An RNN is able to learn input-output mappings that depend on both a current input and past inputs. The RNN will address past and future measurements and make predictions based on this continuous measurement information. One type of RNN that can be used is a long short term memory (LSTM) neural network.

ANNs can learn in a supervised (e.g., classification) or unsupervised (e.g., pattern analysis) manner. Some ANNs (e.g., such as deep neural networks) may include a hierarchy of layers, where the different layers learn different levels of representations that correspond to different levels of abstraction. In deep learning, each level learns to transform its input data into a slightly more abstract and composite representation.

In one implementation, an AI model 232A-P includes a generative AI model. A generative AI model can deviate from a machine learning model based on the generative AI model's ability to generate new, original data, rather than making predictions based on existing data patterns. A generative AI model can include a generative adversarial network (GAN), a variational autoencoder (VAE), or a large language model (LLM). In some instances, a generative AI model can employ a different approach to training or learning the underlying probability distribution of training data, compared to some machine learning models. For instance, a GAN can include a generator network and a discriminator network. The generator network attempts to produce synthetic data samples that are indistinguishable from real data, while the discriminator network seeks to correctly classify between real and fake samples. Through this iterative adversarial process, the generator network can gradually improve its ability to generate increasingly realistic and diverse data.

Generative AI models also have the ability to capture and learn complex, high-dimensional structures of data. One aim of generative AI models is to model underlying data distribution, allowing them to generate new data points that possess the same characteristics as training data. Some machine learning models (e.g., that are not generative AI models) focus on optimizing specific prediction of tasks.

In some implementations, an AI model 232A-P is an AI model that has been trained on a corpus of data. In some implementations, the AI model 232A-P can be a model that is first pre-trained on a corpus of data to create a foundational model, and afterwards fine-tuned on more data pertaining to a particular set of tasks to create a more task-specific, or targeted, model. The foundational model can first be pre-trained using a corpus of data that can include data in the public domain, licensed content, and/or proprietary content. Such a pre-training can be used by the AI model 232A-P to learn broad elements including, image or speech recognition, general sentence structure, common phrases, vocabulary, natural language structure, and other elements. In some implementations, this first, foundational model is trained using self-supervision, or unsupervised training on such datasets.

In some implementations, the AI model 232A-P is then further trained or fine-tuned on organizational data, including proprietary organizational data. The AI model 232A-P can also be further trained or fine-tuned on organizational data associated with identifying applications capable of performing a task, generating instructions for an application to perform a portion of a task, or performing a task requested by a user of a client device 110.

In some implementations, the second portion of training, including fine-tuning, can be unsupervised, supervised, reinforced, or any other type of training. In some implementations, this second portion of training includes some elements of supervision, including learning techniques incorporating human or machine-generated feedback, undergoing training according to a set of guidelines, or training on a previously labeled set of data, etc. In a non-limiting example associated with reinforcement learning, the outputs of the AI model 232A-P while training can be ranked by a user, according to a variety of factors, including accuracy, helpfulness, veracity, acceptability, or any other metric useful in the fine-tuning portion of training. In this manner, the AI model 232A-P can learn to favor these and any other factors relevant to users when generating a response. Further details regarding training are provided below.

In some implementations, an AI model 232A-P includes one or more pre-trained models, or fine-tuned models. In a non-limiting example, in some implementations, the goal of the "fine-tuning" is accomplished with a second, or third, or any number of additional models. For example, the outputs of the pre-trained model can be input into a second AI model 232A-P that has been trained in a similar manner as the "fine-tuned" portion of training above. In such a way, two more AI models 232A-P can accomplish work similar to one model that has been pre-trained, and then fine-tuned.

As indicated above, an AI model 232A-P can be one or more generative AI models, allowing for the generation of new and original content. The generative AI model can use other machine learning models including an encoder-decoder architecture including one or more self-attention mechanisms, and one or more feed-forward mechanisms. In some implementations, the generative AI model includes an encoder that can encode input textual data into a vector space representation; and a decoder that can reconstruct the data from the vector space, generating outputs with increased novelty and uniqueness. The self-attention mechanism can compute the importance of phrases or words within a text data with respect to all of the text data. A generative AI model can also utilize the previously discussed deep learning techniques, including RNNs, CNNs, or transformer networks. Further details regarding generative AI models are provided herein.

In some implementations, different AI models 232A-P of the one or more AI models 232A-P are different types of AI models 232A-P. Multiple AI models 232A-P of the one or more AI models 232A-P can form an ensemble.

In one implementation, the training subsystem 210 manages the training and testing of the one or more AI models 232A-P. The training data engine 212 can generate training data to train an AI model 232A-P. In one implementation, the training data includes example requests to perform tasks, instructions related to the tasks for one or more applications 116A-N, 126A-M, 132A-O, APIs for one or more applications 116A-N, 126A-M, 132A-O, or other data. In an illustrative example, the training data engine 212 can initialize a training set *T* to null. The training data engine 212 can obtain training data, add the training data to the training set *T*, and determine whether training set *T* is sufficient for training the AI model 232A-P. The training set *T* can be sufficient for training the AI model 232A-P if the training set *T* includes a threshold amount of training data, in some implementations. In response to determining that the training set *T* is not sufficient for training, the training data engine 212 obtain and add further training data to set *T.* In response to determining that the training set *T* is sufficient for training, the training data engine 212 can provide the training set *T* to the training engine 214.

The training engine 214 can train the AI model 232A-P using the training data (e.g., training set *T*). The AI model 232A-P can refer to the model artifact that is created by the training engine 214 using the training data, where such training data can include training inputs and, in some implementations, corresponding target outputs (e.g., correct answers for respective training inputs). The training engine 214 can input the training data into the AI model 232A-P so that the AI model 232A-P can find patterns in the training data and configure itself based on those patterns.

Where the AI model 232A-P uses supervised learning, the training engine 214 can assist the AI model 232A-P in determining whether the AI model 232A-P maps the training input to the target output (the answer to be predicted). Where the AI model 232A-P uses unsupervised learning, the training engine 214 can input the training data into the AI model 232A-P. The AI model 232A-P can configure itself based on the input training data, but since the training data may not include a target output, the training engine 214 may not assist the AI model 232A-P in determining whether the AI model 232A-P provided a correct output during the training process.

The validation engine 216 can be capable of validating a trained AI model 232A-P using a corresponding set of features of a validation set from the training data engine 212. The validation engine 216 can determine an accuracy of each of the trained AI models 232A-P based on the corresponding sets of features of the validation set. Where the training data may not include a target output, validating a trained AI model 232A-P may include obtaining an output from the AI model 232A-P and providing the output to another entity for evaluation. The other entity may include another AI model configured to evaluate the output of the AI model that is undergoing training. The other entity may include a human. The validation engine 216 can discard a trained AI model 232A-P that has an accuracy that does not meet a threshold accuracy or that otherwise fails evaluation. In some implementations, the selection engine 218 is capable of selecting a trained AI model 232A-P that has an accuracy that meets a threshold accuracy. In some implementations, the selection engine 218 is capable of selecting the trained AI model 232A-P that has the highest accuracy of multiple trained AI models 232A-P. In some implementations, the selection engine 218 obtains input from another AI model or a human and can select a trained AI model 232A-P based on the input.

The testing engine 220 may be capable of testing a trained AI model 232A-P using a corresponding set of features of a testing set from the training data engine 212. For example, a first trained AI model 232A-P that was trained using a first set of features of the training set may be tested using the first set of features of the testing set. The testing engine 220 can determine a trained AI model 232A-P that has the highest accuracy or other evaluation of all of the trained AI models 232A-P based on the testing sets.

As described above, the AI training system 200 can be configured to train an LLM. It should be noted that the AI training system 200 can train an LLM in accordance with implementations described herein or in accordance with other techniques for training LLMs. For example, an LLM can be trained on a large amount of data, including prediction of one or more missing words in a sentence, identification of whether two consecutive sentences are logically related to each other, generation of next texts based on prompts, etc.

In some implementations, the AI model subsystem 230 selects an AI model 232A-P from the one or more AI models 232A-P. Selecting an AI model 232A-P may include selecting the AI model 232A-P for training or for use. For example, the training subsystem 210 can provide data to the AI model subsystem 230 indicating which AI model 232A-P is to be trained. The AI model subsystem 230 can obtain data from a component of the task orchestrator 112, dispatch subsystem 124, or some other component of the system 100 indicating which AI model 232A-P to use to generate output.

In one implementation, the task server 120 includes the AI training system 200. Another server in data communication with the client device 110 or the task server 120 (e.g., over the computer network 140) may include AI training system 200. The AI training system 200 may provide the AI model subsystem 230 or one or more AI models 232A-P to the AI subsystem 114 of the client device.

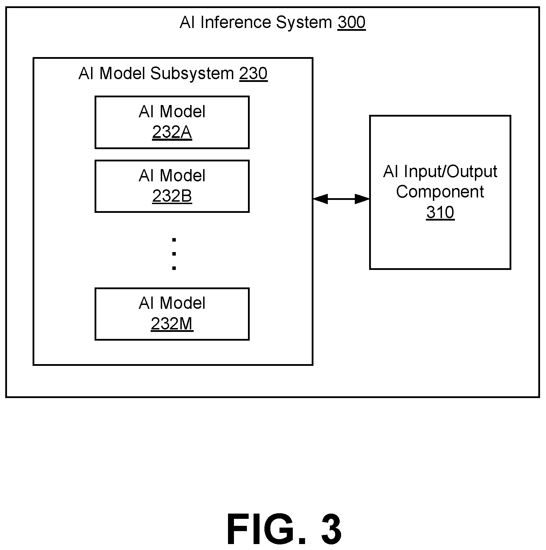

**FIG. 3** depicts one implementation of an AI inference system 300. The AI inference system 300 may include the AI model subsystem 230, which may include one or more AI models 232A-P. The AI inference system 300 may include an AI input/output component 310. The AI input/output component 310 may be configured to feed data as input to an AI model 232A-P and obtain one or more outputs. In such implementations, the AI input/output component 310 feeds requests to perform tasks as input to an AI model 232A-P and obtain one or more outputs.

As indicated above, in some implementations, the AI model 232A-P includes an LLM. In some implementations, the LLM includes generative AI functionality. In such implementations, the AI model 232A-P generates new content based on provided input data (e.g., a request to perform a task). The generative AI model 232A-P can be supported by a prompt subsystem (not shown in **FIG. 1**), which can reside on the client device 110 or the task server 120. The prompt subsystem can enable a user or a component of the client device 110 or the task server 120 to access the generative AI model 232A-P. The prompt subsystem can be configured to perform automated identification of, and facilitate retrieval of, relevant and timely contextual information for efficient and accurate processing of prompts by the AI model 232A-P. Using the computer network 140 (or another network), the prompt subsystem can be in communication with one or more the task orchestrator 112, the AI subsystem 114, the safety check subsystem 122, the dispatch subsystem 124, the one or more applications 116A-N, 126A-M, 132A-O, or the quality check subsystem 128. Communications between the prompt subsystem and a component that provides input to or receives output from the AI model 232A-P can be facilitated by a generative model application programming interface (API), in some implementations. Communications between the prompt subsystem and a component that provides input to or receives output from the AI model 232A-P can be facilitated by a data management API. In additional or alternative implementations, the generative model API translates prompts generated by the prompt subsystem into unstructured natural-language format and, conversely, translate responses received from the AI model 232A-P into any suitable form (e.g., including any structured proprietary format as can be used by the prompt subsystem). Similarly, the data management API can support instructions that can be used to communicate data requests to the client device 110, the task server 120, or the third-party server 130 and formats of data received from such components.

As indicated above, a user can interact with the prompt subsystem via a prompt interface. The prompt interface may include a UI element that can support any suitable types of user inputs (e.g., textual inputs, speech inputs, image inputs, etc.). The UI element can further support any suitable types of outputs (e.g., textual outputs, speech outputs, image outputs, etc.). In some implementations, the UI element is a web-based UI element, a mobile application-supported UI element, or any combination thereof. The UI element includes selectable items, in some implementations, that enables a user to select from multiple generative AI models 232A-P. The UI element can allow the user to provide consent for the prompt subsystem or the generative AI model 232A-P to access user data or other data associated with a client device 110, the task server 120, or the third-party server 130; process or store new data received from the user; and the like. The UI element can additionally or alternatively allow the user to withhold consent to provide access to user data. In some implementations, user input entered using the UI element is communicated to the prompt subsystem by a user API. The user API can be located at the client device 110 or the task server 120.

In some implementations, the prompt subsystem includes a prompt analyzer to support various operations of the present disclosure. For example, the prompt analyzer can receive an input (e.g., a prompt submitted by a user of or component of the client device 110) and generate one or more intermediate prompts to the generative AI model 232A-P to determine what type of data the generative AI model 232A-P may need to successfully respond to the input. Upon receiving a response from the generative AI model 232A-P, the prompt analyzer can analyze the response, form a request for relevant contextual data stored at the client device 110, the task server 120, or the third-party server 130, which can then supply such data. The prompt analyzer can then generate a prompt to the generative AI model 232A-P that includes the original prompt and the contextual data. In some implementations, the prompt analyzer, itself, includes a lightweight generative AI model 232A-P that can process the intermediate prompt(s) and determine what type of contextual data can be needed by the generative AI model 232A-P together with the original prompt to ensure a meaningful response from generative AI model 232A-P.

In some implementations, the AI subsystem 114 includes the AI inference system 300. In one implementation, the AI inference system 300 is part of the AI training system 200, or the AI inference system 300 includes the AI training system 200.

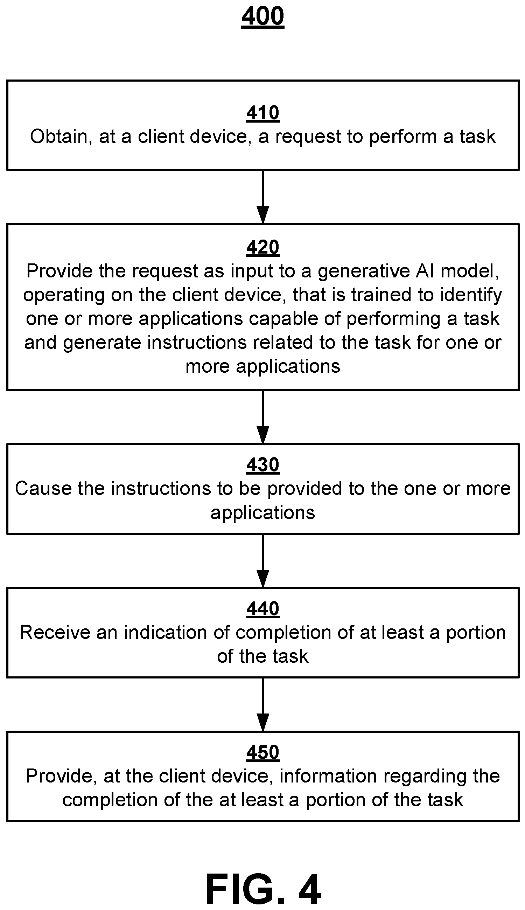

**FIG. 4** is a flowchart illustrating one embodiment of a method 400 for on-device AI, in accordance with some implementations of the present disclosure. A processing device, having one or more central processing units (CPU(s)), one or more graphics processing units (GPU(s)), and/or memory devices communicatively coupled to the one or more CPU(s) and/or GPU(s) can perform the method 400 and/or one or more of the method's 400 individual functions, routines, subroutines, or operations. In certain implementations, a single processing thread can perform the method 400. Alternatively, two or more processing threads can perform the method 400, each thread executing one or more individual functions, routines, subroutines, or operations of the method. In an illustrative example, the processing threads implementing the method 400 can be synchronized (e.g., using semaphores, critical sections, and/or other thread synchronization mechanisms). Alternatively, the processing threads implementing the method 400 can be executed asynchronously with respect to each other. Various operations of the method 400 can be performed in a different (e.g., reversed) order compared with the order shown in **FIG. 4**. Some operations of the method 400 can be performed concurrently with other operations. Some operations can be optional. The task orchestrator 112 can perform one or more of the operations of the method 400.

At block 410, processing logic obtains a request to perform a task. Obtaining the request can occur at the client device 110. In one implementation, obtaining the request may include obtaining input from a user of the client device 110. Obtaining input from a user may include an application 116A-N receiving user input using a user interface (UI) of the application 116A-N. The input may include a request from the user or a request generated by the application 116A-N in response to input from the user. The application 116A-N can provide the request to the task orchestrator 112. In some implementations, the application 116A-N can be a virtual meeting application, the user may be a participant of a virtual meeting, the task may be related to the virtual meeting (e.g., summarizing the discussion of the virtual meeting, generating notes based on the discussion of the virtual meeting, identifying action items discuss during the virtual meeting), and the task may be obtained during the virtual meeting.

In some implementations, the request includes text data. The user may have input the text data using the UI of an application 116A-N. In one implementation, the request includes audio data. The audio data may include speech data of the user of the client device 110 (e.g., audio data generated from an audio stream produced by a client device 110 during a virtual meeting). The client device 110 can convert the audio data into corresponding text data. For example, the application 116A-N that obtained the request can provide the audio data to a speech-to-text application of the one or more applications 116A-N.

In one implementation, the request comprises multimodal data. Multimodal data may include data in multiple formats. The multimodal data may include a combination of text data, audio data, image data, video data, binary data, or other types of data. As an example, the request may include an image of a crowd of people and may further include the text data, "Determine the number of people in this image."

Processing logic can further determine that the request complies with predetermined request safety criteria. A request can comply with predetermined safety criteria responsive to the request being free of unsafe material. As discussed above, material can be unsafe if the material can endanger people or property. Examples of unsafe materials include a request for instructions on how to construct an explosive device or computer code configured to perform malicious operations on a computing device. Material can be unsafe if the material can cause offense, is harassing, or contains explicit content.

Determining that the request complies with the predetermined request safety criteria, in one implementation, includes providing the request to a safety criteria application executing on a computing device separate from the client device 110. The safety criteria application may include the safety check subsystem 122, and the computing device separate from the client device 110 may include the task server 120. Determining that the request complies with the predetermined safety criteria, in some implementations, includes providing the request to a safety criteria application executing on the client device 110. The safety criteria application on the client device 110 may include an implementation of the safety check subsystem 122 located on the client device 110. Determining that the request complies with the predetermined request safety criteria may further include obtaining an indication provided by the safety criteria application that the request complies with the predetermined request safety criteria.

At block 420, processing logic provides the request as input to an AI model 232A-P operating on the client device 110. The AI model 232A-P may include a generative AI model. The AI model 232A-P may include an AI model trained to identify one or more applications 116A-N, 126A-M, 132A-O capable of performing the task. The AI model 232A-P can be trained to generate instructions related to the task for the one or more applications 116A-N, 126A-M, 132A-O.

In one implementation, the instructions related to the task for the one or more applications 116A-N, 126A-M, 132A-O includes an API call to an application of the one or more applications 116A-N, 126A-M, 132A-O. As discussed above, the AI model 232A-P may include a generative AI model that has been trained on the APIs of one or more of the applications 116AN, 126A-M, 132A-O. The generative AI model may have been trained on example requests to perform tasks. The training data may include example requests and corresponding API calls to one or more of the applications 116A-N, 126A-M, 132A-O that perform the task. Training on such training data can train the generative AI model to produce a certain API call in response to encountering a certain request to perform a task. The AI model 232A-P can obtain, as input, a request to perform a task and can generate, as output, one or more instructions in the form of API calls to the one or more applications 116A-N, 126A-M, 132A-O.

As discussed above, in some implementations, the request includes audio data, and processing logic converts the audio data into corresponding text data. Block 420 may include providing the corresponding text data as the input to the generative AI model 232A-P.

At block 430, processing logic causes the instructions related to the task to be provided to the one or more applications 116A-N, 126A-M, 132A-O. In one implementation, the task orchestrator 112 determines, based on client device criteria, that at least a portion of the instructions can be provided to an application 116A-N executing on the client device 110. The task orchestrator 112 can cause the at least a portion of the instructions to be provided to the application 116A-N executing on the client device 110.

The client device criteria may include the client device 110 meeting a predetermined computing resources specification. The predetermined computing resources specification may include the client device 110 having above a threshold processor speed, above a threshold memory capacity, above a threshold data storage capacity, above a threshold battery charge, or some other computing resource specification. The predetermined computing resources specification may include the client device 110 having a certain AI model 232A-P installed on the client device 110.

In some implementations, the client device criteria include the client device 110 having a predetermined status. The predetermined status may include a user of the client device 110 having a predetermined status at the entity that operates the task server 120. The predetermined status may include the user having a certain type of account with the entity (e.g., an unpaid account, a paid account, or the like). The predetermined status may include the client device 110 not being in data communication with the task server 120 (e.g., because the client device 110 is experiencing difficulties connecting to the computer network 140).

The client device criteria may include the client device 110 storing data used by the application 116A-N executing on the client device to perform at least a portion of the task. In some implementations, the client device 110 can store data (e.g., in flash memory, on a hard disk, or the like) that an application 116A-N can use to perform a task. Rather than send the data to the task server 120 to be processed by an application 126A-M on the server, the task orchestrator 112 can cause an application 116A-N executed on the client device 110 to process the data.

In one implementation, the client device criteria include the client device 110 storing encrypted data. The encrypted data, in an unencrypted state, can be used to perform at least a portion of the task. The client device 110 can have access to one or more encryption keys used to decrypt the encrypted data. The unencrypted data can be encrypted using an encryption key (e.g., a symmetric key or asymmetric key) and can require a decryption key to decrypt the data. The data may be in an encrypted state in response complying with privacy laws or regulations, a privacy policy, or some other data privacy framework that prohibits third parties (including entities that operate the task server 120 or the third-party server 130) from accessing the data in an unencrypted state. Thus, the task server 120 or the third-party server 130 may not have access to the decryption key, and the one or more applications 126A-M, 132A-O may not be able to process the encrypted data to perform the task.

In one implementation, the task orchestrator 112 determines, based on client device criteria, that at least a portion of the instructions should not be provided to an application 116A-N executing on the client device 110. The task orchestrator 112 can cause the at least a portion of the instructions to be provided to one or more applications 126A-M, 132A-O executing on a computing device separate from the client device 110. The computing device separate from the client device 110 may include the task server 120 or the third-party server 130. In some implementations, the task server 120 and/or the third-party server 130 may be part of a virtual meeting platform.

In one or more implementations, the client device criteria include the client device 110 not meeting a predetermined computing resources specification. The client device criteria may include the task server 120 (or a computing device associated with the task server 120) storing data used by an application 126A-M, 132A-O executing on the task server 120 or the third-party server 132 to perform at least a portion of the task.

At block 440, processing logic receives an indication of completion of at least a portion of the task. In some implementations, the indication may include data output by an application 116A-N, 126A-M, 132A-O that was provided an instruction related to the task. The data may include a confirmation that the portion of the task has been successfully completed. The data may include an error message from the application 116A-N, 126A-M, 132A-O indicating that the portion of the task was not successfully completed. The data may include a result generated by the application 116A-N, 126A-M, 132A-O responsive to completing the at least a portion of the task. For example, where the task includes translating text data from one language to another, a result generated by an application 116A-N, 126A-M, 132A-O may include the translation of the text. The data may include other data.

In one implementation, responsive to the completion of the at least a portion of the task, the task orchestrator 112 obtains a result of the task. The task orchestrator 112 can obtain outputs from one or more applications 116A-N, 126A-M, 132A-O and can assemble the outputs into the result of the task.

In some implementations, the task orchestrator 112 determines whether the result complies with predetermined result safety criteria. Determining that the result complies with the predetermined result safety criteria may include the task orchestrator 112 providing the result to a safety criteria application executing on a computing device separate from the client device 110. The computing device separate from the client device 110 may include the task server 120, and the safety criteria application may include the safety check subsystem 122. The task orchestrator 112 can obtain an indication provided by the safety criteria application that the result complies with the predetermined result safety criteria. In some implementations, the task orchestrator 112 provides the result to a safety criteria application executing on the client device 110 and obtains an indication from the safety criteria application that the result complies with the predetermined result safety criteria. The result safety criteria may be similar to the request safety criteria, discussed above.

In one implementation, the task orchestrator 112 can use a quality criteria application to determine a quality of the result. The quality criteria application may include the quality check subsystem 128 of the task server 120. The quality of the result may include a factual accuracy of the result. In some implementations, the quality check subsystem 128 uses an AI model 232A-P to determine a quality level of the input. For example, the quality check subsystem 128 may include an AI model 232A-P that includes an LLM trained on a general corpus of knowledge, and the quality check subsystem 128 can provide, as a prompt to the LLM, the result and a command to determine whether the result is factually accurate. The AI model 232A-P can generate an output indicating a quality of the result. The output may include a binary value (e.g., accurate or not accurate), a value indicating a confidence level of the result (e.g., a value between 0 and 1 where values closer to 0 indicate less confidence that the result is factually accurate and values closer to 1 indicate more confidence), or some other output indicating a quality of the result.

In some implementations, where at least some of the instructions are provided to applications 116A-N executing on the client device 110, responsive to the quality of the result being below a threshold quality, the task orchestrator causes the instructions related to the task (discussed above in relation to blocks 420 and 430) to be provided to one or more applications 126A-M, 132A-O executing on a computing device separate from the client device 110 (e.g., the task server 120 or the third-party server 130). Because the applications 116A-N executing on the client device 110 can produce outputs of less quality than the applications 126A-M, 132A-O executing on the task server 120 or third-party server 130 (e.g., due to computing resources constraints of the client device 110), the task orchestrator 112 can cause the instructions to be provided to applications 126A-M, 132A-O executing on the task server 120 or third-party server 130 to re-perform the task and provide a result of higher quality.

At block 450, processing logic provides, at the client device 110, information regarding the completion of the at least a portion of the task. In some implementations, the task orchestrator 112 can provide, to a UI of the client device 110, data to be displayed to the user of the client device 110 on the UI. The data may include data indicating that the task has been completed. The data may include data based on the result of the task. The data may include text data, image data, video data, or other types of data. The data may indicate to the user that the task could not be completed. In some implementations, the UI is a virtual meeting UI presented to the user of the client device 110 during the virtual meeting.

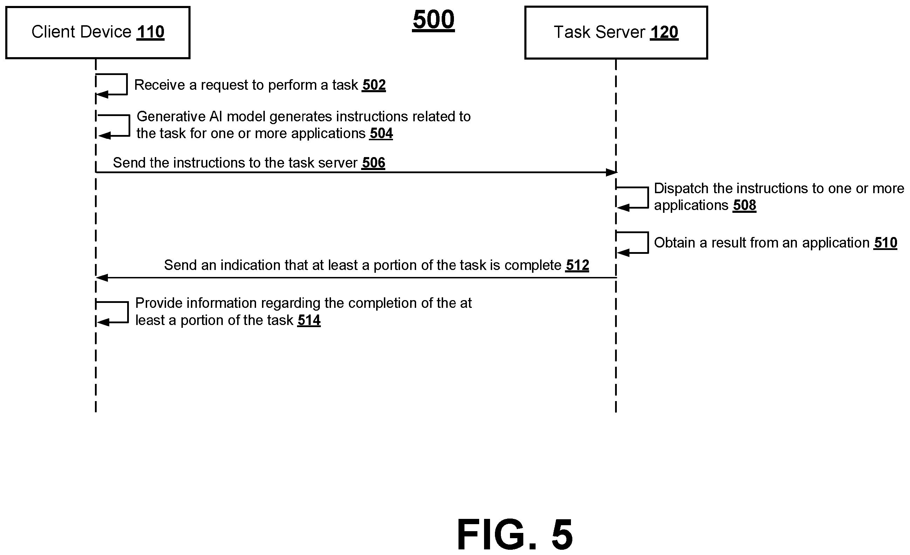

**FIG. 5** depicts a sequence diagram illustrating an example flow of data 500 for on-device AI, in accordance with some implementations of the present disclosure. The flow of data 500 depicts various operations occurring on the client device 110 or the task server 120 and the flow of data between these devices.

At operation 502, the client device 110 can receive a request to perform a task. Operation 502 may include functionality similar to the functionality of block 410 of the method 400. Operation 504 may include a generative AI model 232A-P of the AI subsystem 114 generating instructions related to the task for one or more applications 116A-N, 126A-M, 132A-O. Operation 504 may include functionality similar to the functionality of block 420 of the method 400.

At operation 506, the client device 110 can send the instructions to the task server 120. Operation 506 may include functionality similar to the functionality of block 430 of the method 400. At operation 508, the task server can receive the instructions, determine which instructions to provide to which applications 126A-M, 132A-O, and dispatch the instructions to the determined applications 126A-M, 132A-O. For example, the dispatch subsystem 124 may determine which applications 126A-M, 132A-O will receive which instructions and dispatch the instructions to the selected applications 126A-M, 132A-O. At operation 510, the task server 120 can obtain a result from an application 126A-M, 132A-O. For example, the dispatch subsystem 124 can obtain a result from an application 126A-M, 132A-O.

At operation 512, the task server can send, to the client device 110, an indication that at least a portion of the task is complete. For example, the dispatch subsystem 124 can send the indication to the client device 110. Operation 512 may include functionality similar to the functionality of block 440 of the method 400. At operation 514, the client device 110 can provide information regarding the completion of the at least a portion of the task. For example, the task orchestrator 112 can provide the information regarding the completion of the at least a portion of the task to a UI of the client device for display on the UI. Operation 514 may include functionality similar to block 450 of the method 400.

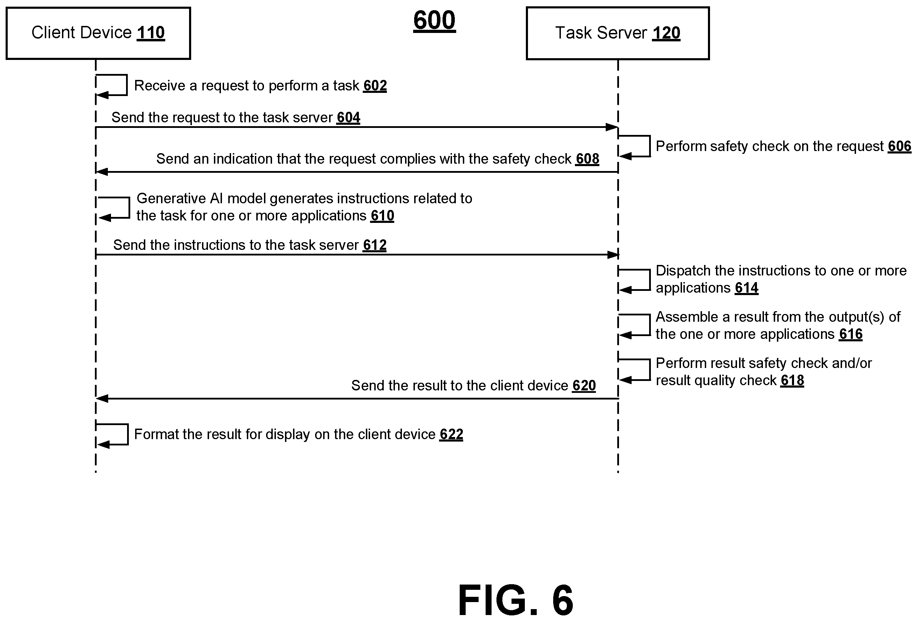

**FIG. 6** depicts a sequence diagram illustrating an example flow of data 600 for on-device AI, in accordance with some implementations of the present disclosure. The flow of data 600 may include similar operations to the flow of data 500. However, the flow of data 600 may include additional functionality, such as performing safety checks on the request to perform the task and/or the result of the task, as discussed below.

At operation 602, the client device 110 can receive a request to perform a task. Operation 602 may include functionality similar to the functionality of block 410 of the method 400. At operation 604, the client device 110 can send the request to the task server 120. For example, the task orchestrator 112 of the client device 110 can send the request to the safety check subsystem 122 of the task server 120. At operation 606, the task server 120 can perform a safety check on the request. For example, as discussed above, the safety check subsystem 122 can determine if a portion of request is unsafe and should not be processed by one or more applications 116A-N, 126A-M, 132A-O. Responsive to the request complying with the safety check, at operation 608, the task server 120 can send an indication to the client device 110 that the request complies with the safety check. For example, the safety check subsystem 122 can send the indication to the task orchestrator 112.

Responsive to the request not complying with the safety check (e.g., because the request may include unsafe material), the indication from the task server 120 may include data indicating that the request is unsafe. The client device 110 can perform a preventative action, which may include not providing the request to one or more applications 116A-N, 126A-M, 132A-O or may include providing a message to a UI of the client device 110 notifying the user that the request was unsafe and will not be processed.

At operation 610, a generative AI model 232A-P of the AI subsystem 114 can generate instructions related to the task for one or more applications 116A-N, 126A-M, 132A-O. Operation 610 may include functionality similar to the functionality of block 420 of the method 400. Operation 612 may include the client device 110 sending the instructions to the task server 120, which may include functionality similar to the functionality of block 430 of the method 400. Operation 614 may include dispatching the instructions to one or more applications 126A-M, 132A-O. For example, the dispatch subsystem 124 can receive the instructions, determine which instructions to provide to which applications 126A-M, 132A-O, and dispatch the instructions to the determined applications 126A-M, 132A-O.

At operation 616, the client device 110 can obtain one or more outputs of the one or more applications 126A-M, 132A-O and can assemble the one or more outputs into a result. For example, the dispatch subsystem 124 can obtain outputs from the applications 126A-M, 132A-O and assemble the outputs into a result. At operation 618, the task server 120 can perform a result safety check and/or a result quality check. For example, the dispatch subsystem 124 can provide the result to the safety check subsystem 122, and the safety check subsystem 122 can perform a safety check on the result. The dispatch subsystem 124 can provide the result to the quality check subsystem 128, and the quality check subsystem 128 can determine if the result is above a threshold quality. Responsive to the result complying with the safety check and being above the threshold quality, at operation 620, the task server 120 can send the result to the client device 110, and at operation 622, the client device 110 can format the result for display on the client device 110.

Responsive to the result not complying with the safety check or not being above the threshold quality, the task server 120 can send an indication to the client device 110 that the result did not comply with the safety check or did not meet the threshold quality. The client device 110 can provide a message to a UI of the client device 110 notifying the user that the result was unsafe or was not of sufficient quality.

In some implementations, the task server 120 performs the result safety check or the result quality check, but not both. In such implementations, the task server 120 can send the result to the client device 110 in operation 620 responsive to the result safety check indicating that the result is safe, or the task server 120 can send the result to the client device 110 responsive to the result quality check indicating that the result is of sufficient quality, as applicable. In implementations where the task server 120 performs both the result safety check and the result quality check, the task server 120 can send the result to the client device 110 in operation 620 responsive to both the result safety check indicating that the result is safe and responsive to the result quality check indicating that the result is of sufficient quality.

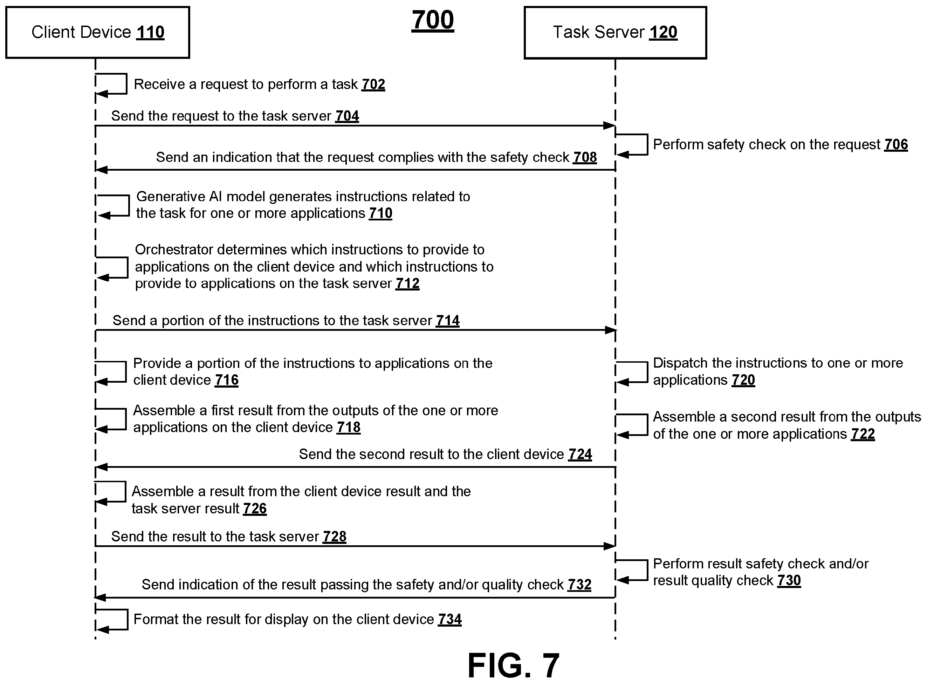

**FIG. 7** depicts a sequence diagram illustrating an example flow of data 700 for on-device AI, in accordance with some implementations of the present disclosure. The flow of data 700 may include similar operations to the flow of data 600. However, the flow of data 700 may include additional functionality, such as determining which instructions to provide to applications 116A-N on the client device 110 and which instructions to provide to applications 126A-M, 132A-O on a device external from the client device 110, as discussed below.

At operation 702, the client device 110 can receive a request to perform a task. At operation 704, the client device 110 can send the request to the task server 120. At operation 706, the task server 120 can perform a safety check on the request. Responsive to the request complying with the safety check, at operation 708, the task server 120 can send an indication to the client device 110 that the request complies with the safety check. At operation 710, a generative AI model 232A-P of the AI subsystem 114 can generate instructions related to the task for one or more applications 116A-N, 126A-M, 132A-O. Operations 702-710 may include similar functionality to the functionality of operations 602-610, respectively, of the data flow 600.

At operation 712, the task orchestrator 112 of the client device 110 can determine which instructions to provide to the applications 116A-N on the client device 110 and which instructions to provide to the applications 126A-M, 132A-O on the task server 120 or the third-party server 130. For example, as discussed above, the task orchestrator 112 can determine, based on client device criteria, that at least a portion of the instructions can be provided to one or more applications 116A-N executing on the client device 110. The task orchestrator 112 can determine that the remaining instructions are to be provided to the task server 120 and/or the third-party server 130 for processing by the one or more applications 126A-M, 132A-O. The task orchestrator 112, at operation 714, can send such instructions to the task server 120 and/or the third-party server 130.

At operation 716, the client device 110 can provide a portion of the instructions to one or more applications 116A-N executing on the client device 110. The portion of the instructions may include the instructions selected by the task orchestrator 112 in operation 712 to be provided to the one or more applications 116A-N. The one or more applications 116A-N can process the instructions and generate one or more outputs. At operation 718, the client device 110 can assemble a first result from the one or more outputs of the one or more applications 116A-N. For example, the task orchestrator 112 can obtain the one or more outputs from the one or more applications 116A-N.

At operation 720, the task server 120 can obtain the instructions provided in operation 714 and can dispatch the instructions to one or more applications 126A-M, 132A-O. The one or more applications 126A-M, 132A-O can process the instructions and generate one or more outputs. At operation 722, the task server 120 can assemble a second result from the one or more outputs of the one or more applications 126A-M, 132A-O. In some implementations, the operations 720 and/or 722 can occur at least partly in parallel with the operations 716 and/or 718. The operations 720 and 722 may include functionality similar to the functionality of operations 614 and 618 of the data flow 600.

At operation 724, the task server 120 can send the second result assembled in operation 722 to the client device 110. At operation 726, the client device 110 can assemble a result from the first result of operation 718 and the second result of operation 722. For example, the task orchestrator 112 can obtain the first result and the second result and can assemble the result from the first and second results.

At operation 728, the client device 110 can send the result to the task server 120. Operation 730 may include performing a safety check and/or a quality check on the result. Responsive to the result complying with the safety check and exceeding a threshold quality, at operation 732, the task server 120 can send an indication to the client device 110 that the result passed the safety check and the quality check (the task server 120 can send an indication and not the result itself since the client device 110 already has a copy of the result assembled as part of operation 726). At operation 734, the client device 110 can format the result for display on the client device 110. Operations 730 and 734 may include functionality similar to the functionality of operations 618 and 622, respectively, of the data flow 600.

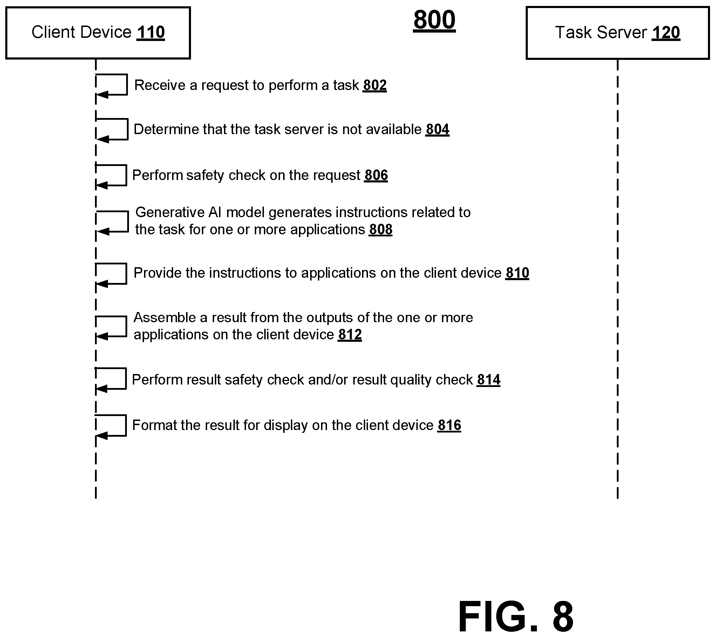

**FIG. 8** depicts a sequence diagram illustrating an example flow of data 800 for on-device AI, in accordance with some implementations of the present disclosure. The flow of data 800 may include similar operations to the flow of data 700. However, the flow of data 800 may only include operations that occur at the client device 110, for example, because the client device 110 is not in data communication with the task server 120 or the third-party server 130 (e.g., because of network connectivity issues).

At operation 802, the client device 110 can receive a request to perform a task. Operation 802 may include similar functionality to the functionality of operation 702 of the data flow 700. At operation 804, the client device 110 can determine that the task server 120 is not available. For example, the client device 110 can determine that the client device 110 and the task server 120 are not in data communication (e.g., because the client device 110 is not connected to the computer network 140). In another example, the client device 110 can determine that the task server 120 is not reachable over the computer network 140. The client device 110 can determine that the task server 120 is busy handling other requests and does not have sufficient computing resources to process instructions from the client device 110.

At operation 806, the client device 110 can perform a safety check on the request. The client device 110 may include a safety check subsystem 122, and the task orchestrator 112 can provide the request to the safety check subsystem 122. The safety check subsystem 122 can perform a safety check on the request and provide an indication to the task orchestrator 112 that the request complies with the safety check. Responsive to the request complying with the safety check, at operation 808, a generative AI model 232A-P of the AI subsystem 114 can generate instructions related to the task for one or more applications 116A-N. Operation 808 may include functionality similar to the functionality of operation 710 of the data flow 700.

In one implementation, operation 808 includes the task orchestrator 112 determining whether the one or more applications 116A-N of the client device 110 are capable of processing the instructions. Responsive to the one or more applications 116A-N not being capable of processing the instructions, the client device 110 can provide a message to a UI of the client device 110 notifying the user that the task cannot be performed. The one or more applications 116A-N may be not capable of processing the instructions, for example, because data needed by the one or more applications 116A-N may not be stored on the client device 110, or because the one or more applications 116A-N do not include an application needed to perform the task.

In some implementations, operation 808 includes the task orchestrator 112 determining that the client device 110 does not comply with one or more client device criteria. The task orchestrator 112 can determine that even though the client device 110 may not comply with some client device criteria, the one or more applications 116A-N may still be capable of performing the task. For example, the task orchestrator 112 can determine that the client device 110 does not comply with a predetermined computing resources specification (e.g., a predetermined processor speed, memory capacity, or the like) but that the one or more applications 116A-N could still perform the task (although slower than were the task to be performed by one or more applications 126A-M, 132A-O of the task server 120 and/or third-party server 130). Responsive to the task orchestrator 112 determining that the one or more applications 116A-N of the client device 110 are still capable of performing the task, the client device 110 can provide the instructions to the one or more applications 116A-N at operation 810. In some implementations, the client device 110 provides a message to a UI of the client device 110 notifying the user that the client device 110 can still perform the task but performing the task may take longer. The message may request that the user confirm that the user still wants the client device to perform the task. Responsive to the task orchestrator 112 determining that the one or more applications 116A-N are not capable of performing the task, or responsive to obtaining an indication from the user to not have the client device 110 perform the task, the task orchestrator 112 may not provide the instructions to the one or more applications 116A-N.

At operation 810, the client device 110 can provide the instructions to one or more applications 116A-N on the client device 110. The one or more applications 116A-N can process the instructions and generate one or more outputs. At operation 812, the client device 110 can assemble a result from the one or more outputs of the one or more applications 116A-N. Operations 810 and 812 may include functionality similar to the functionality of operations 716 and 718, respectively, of the data flow 700.

At operation 814, the client device 110 can perform a result safety check and/or a result quality check on the assembled result. For example, the task orchestrator 112 can provide the result to a safety check subsystem 122 on the client device 110. The task orchestrator 112 can provide the result to a quality check subsystem 128 on the client device 110. Operation 814 may include functionality similar to the functionality of operation 730 of the data flow 700.

At operation 816, responsive to the result complying with the safety check and exceeding a threshold quality, the client device 110 can format the result for display on the client device 110. Operation 816 may include functionality similar to the functionality of operation 734 of the data flow 700.

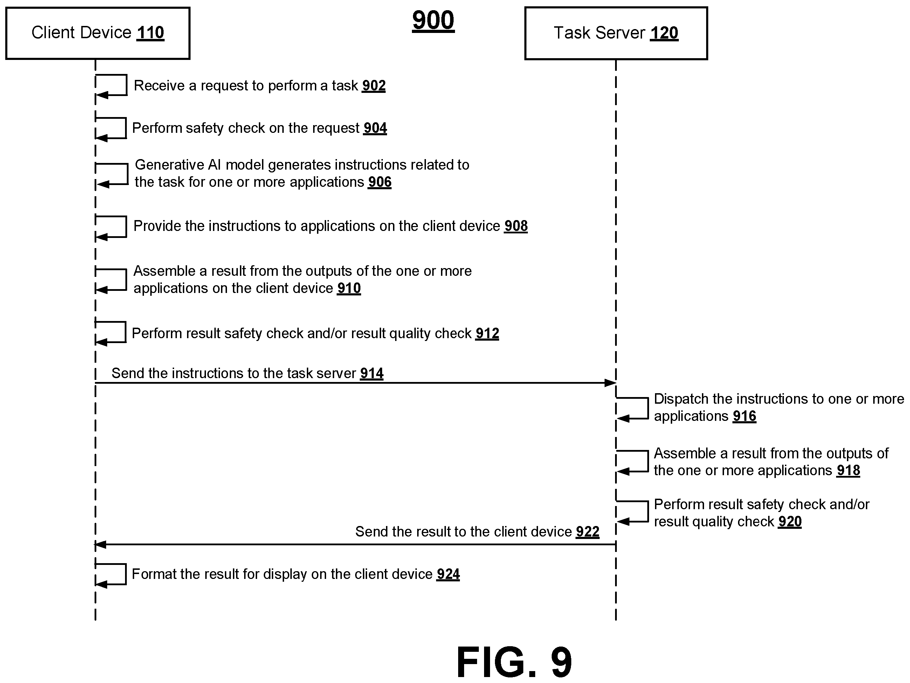

**FIG. 9** depicts a sequence diagram illustrating an example flow of data 900 for on-device AI, in accordance with some implementations of the present disclosure. The flow of data 900 may include similar operations to the flow of data 800. However, the flow of data 900 may include additional functionality related to the task server 120 performing at least a portion of the task after the client device 110 has performed the task (e.g., responsive to the quality of the result generated by the client device 110 being below a threshold quality).

At operation 902, the client device 110 can receive a request to perform a task. Operation 904 may include the client device 110 performing a safety check on the request. At operation 906, responsive to the request complying with the safety check, a generative AI model 232A-P of the AI subsystem 114 can generate instructions related to the task for one or more applications 116A-N. At operation 908, the client device 110 can provide the instructions to one or more applications 116A-N on the client device 110. At operation 910, the client device 110 can assemble a result based on one or more outputs from the one or more applications 116A-N. Operation 912 may include performing a safety check and/or quality check on the result. Operations 902-912 may include functionality similar to operations 802 and 806-814 of the data flow 800.

At operation 912, the quality check subsystem 128 can provide an indication that the quality of the result does not meet a threshold quality. The result may not meet the threshold quality for a variety of reasons. For example, an application of the one or more applications 116A-N on the client device 110 may be of lesser quality than a similar application of the one or more applications 126A-M, 132A-O of the task server 120 or the third-party server 130 (e.g., the application on the task server 120 or the third-party server 130 can use a more powerful AI model than the application on the client device 110). In another example, an application of the one or more applications 126A-M, 132A-O may have access to more accurate data than the application of the one or more applications 116A-N.

Responsive to the quality check subsystem 128 providing an indication that the quality of the result does not meet the threshold quality, at operation 914, the client device 110 can send the instructions generated at operation 906 to the task server 120. The client device 110 can send the instructions to the task server 120 in order for the applications 126A-M, 132A-O to re-perform the task and generate a result with higher quality than the result generated at the client device 110. At operation 916, the task server 120 can dispatch the instructions to one or more applications 126A-M, 132A-O. At operation 918, the task server 120 can assemble a result from the one or more outputs of the one or more applications 126A-M, 132A-O. At operation 920, the task server 120 can perform a result safety check and/or a result quality check. Operations 916-920 may include functionality similar to the functionality of operations 614-618, respectively, of the data flow 600.

At operation 922, responsive to the result complying with the safety check and exceeding a threshold quality, the task server 120 can send the result to the client device 110. Operation 924 may include the client device 110 formatting the result for display on the client device 110. Operations 922-924 may include functionality similar to the functionality of operations 620-622, respectively, of the data flow 600.

It should be noted that while the data flow 900 depicts the client device 110 performing the safety check on the request at operation 904 and the client device performing the result safety check and/or the result quality check at operation 912, these operations 904, 912 can be performed by the task server 120, as explained above regarding operations 706 and 730, respectively, of the data flow 700.

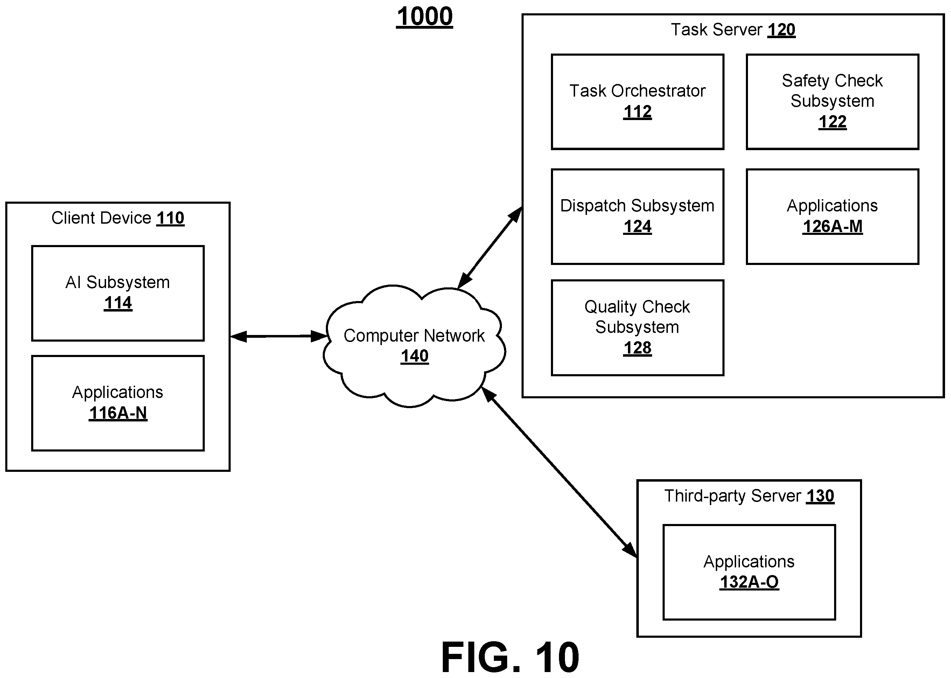

**FIG. 10** schematically illustrates an example system 1000 for on-device AI in which one or more aspects of the present disclosure can be implemented, in accordance with one or more embodiments. The system 1000 may be similar to the system 100 of **FIG. 1** and may include one or more components of the system 100. For example, the system 1000 may include the client device 110 with the AI subsystem 114 and the one or more applications 116A-N; the task server 120 with the safety check subsystem 122, the dispatch system 124, the one or more applications 126A-M, and the quality check subsystem 128; and the third-party server 130 with the one or more applications 132A-Q. However, in the system 1000, the task server 120 may include the task orchestrator 112.

In one implementation, the task server 120 including the task orchestrator 112 provides several benefits. For example, the task server 120 may include information that the task orchestrator 112 may use to determine which portions of the task can be performed on the client device 110 and which portions of the task should be performed on the task server 120 or on the third-party server 130. The client device 110 may not have access to such information. For example, the task server 130 may have more information about a corpus of data used by the user of the client device 110 than the client device 110. The task server 120 may have more information about the computational capabilities of the task server 120 than the client device 110. In one implementation, the task orchestrator 112 being located on the task server 120 may allow the task server 120 to change one or more configurations of the task orchestrator 112 (e.g., one or more client device criteria) without having to provide those changed configurations to the client device 110. Thus, in some implementations, it is beneficial for the task orchestrator 112 to be on the task server 120.

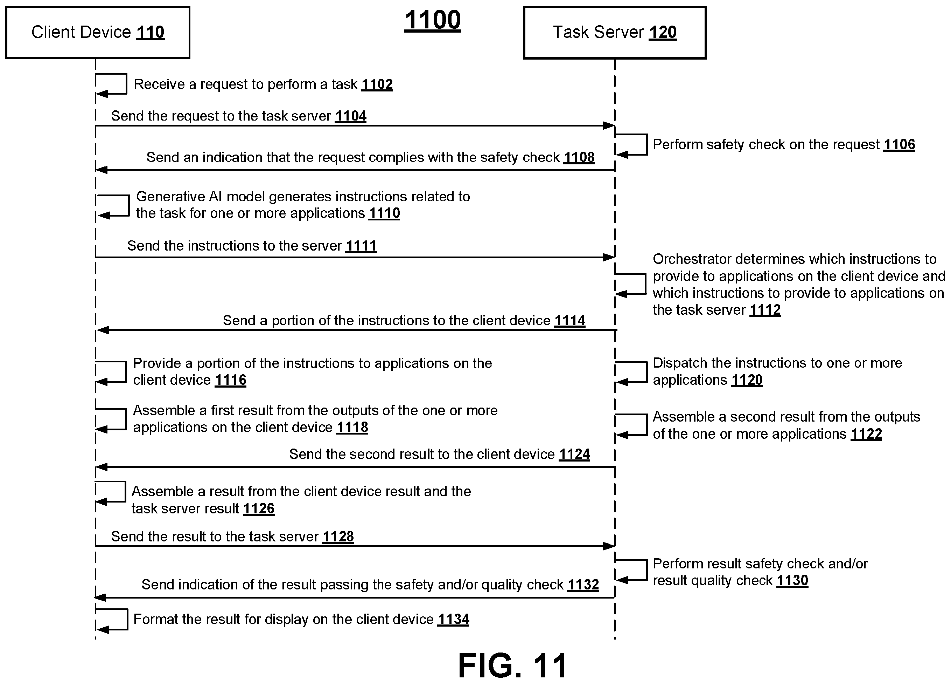

**FIG. 11** depicts a sequence diagram illustrating an example flow of data 1100 for on-device AI, in accordance with some implementations of the present disclosure. The flow of data 1100 may include similar operations to the flow of data 700 of **FIG. 7**. However, the flow of data 1100 may include the task orchestrator 112 operating on the task server 120, as discussed below.

At operation 1102, the client device 110 can receive a request to perform a task. At operation 1104, the client device 110 can send the request to the task server 120. At operation 1106, the task server 120 can perform a safety check on the request. Responsive to the request complying with the safety check, at operation 1108, the task server 120 can send an indication to the client device 110 that the request complies with the safety check. At operation 1110, a generative AI model 232A-P of the AI subsystem 114 can generate instructions related to the task for one or more applications 116A-N, 126A-M, 132A-O. Operations 1102-1110 may include similar functionality to the functionality of operations 702-710, respectively, of the data flow 700.

At operation 1111, the client device 110 can provide the instructions related to the task to the task server 120. At operation 1112, the task orchestrator 112 on the task server 120 can determine which instructions to provide to the applications 116A-N on the client device 110 and which instructions to provide to the applications 126A-M, 132A-O on the task server 120 or the third-party server 130. For example, as discussed above, the task orchestrator 112 can determine, based on a corpus of data available to the task server 120, that at least a portion of the instructions should be provided to one or more applications 126A-M executing on the task server 120. The task orchestrator 112 can determine, based on client device criteria or based on other information, that other instructions are to be provided to the client device 110 and/or the third-party server 130 for processing by the one or more applications 116A-N, 132A-O. The task orchestrator 112, at operation 1114, can send a portion of the instructions to the client device 110.

At operation 1116, the client device 110 can provide a portion of the instructions to one or more applications 116A-N executing on the client device 110. The portion of the instructions may include the instructions selected by the task orchestrator 112 in operation 1112 to be provided to the one or more applications 116A-N. The one or more applications 116A-N can process the instructions and generate one or more outputs. At operation 1118, the client device 110 can assemble a first result from the one or more outputs of the one or more applications 116A-N.

At operation 1120, the task server 120 can obtain the instructions provided in operation 1114 and can dispatch the instructions to one or more applications 126A-M, 132A-O. The one or more applications 126A-M, 132A-O can process the instructions and generate one or more outputs. At operation 1122, the task server 120 can assemble a second result from the one or more outputs of the one or more applications 126A-M, 132A-O. In some implementations, the operations 1120 and/or 1122 can occur at least partly in parallel with the operations 1116 and/or 1118. The operations 1120 and 1122 may include functionality similar to the functionality of operations 714 and 718 of the data flow 700.

At operation 1124, the task server 120 can send the second result assembled in operation 1122 to the client device 110. At operation 1126, the client device 110 can assemble a result from the first result of operation 1118 and the second result of operation 1122. At operation 1128, the client device 110 can send the result to the task server 120. Operation 1130 may include performing a safety check and/or a quality check on the result. Responsive to the result complying with the safety check and exceeding a threshold quality, at operation 1132, the task server 120 can send an indication to the client device 110 that the result passed the safety check and the quality check (the task server 120 can send an indication and not the result itself since the client device 110 already has a copy of the result assembled as part of operation 1126). At operation 1134, the client device 110 can format the result for display on the client device 110. Operations 1130 and 1134 may include functionality similar to the functionality of operations 718 and 722, respectively, of the data flow 700.

In some implementations, one or more of the operations of the data flow 1100 depicted in **FIG. 11** as occurring at the client device 110 may occur at the task server 120. For example, after performing the safety check on the request (operation 1106), the task server 120 may use the generative AI model to generate the one or more instructions related to the task (operation 1110). In such a case, the client device 110 may not send the one or more instructions to the task server 120 (e.g., because the task server 120 already has the instructions). In one implementation, at operation 1124, the client device 110 may send the first result from the outputs of the one or more applications 116A-N on the client device 110 to the task server 120 (instead of the task server 120 sending the second result to the client device 110). At operation 1126, the task orchestrator on the task server 120 may assemble a result from the client device 110 result and the task server result. In such a case, the client device 110 may not send the result to the task server 120 in operation 1128 (e.g., because the task server already has the result).

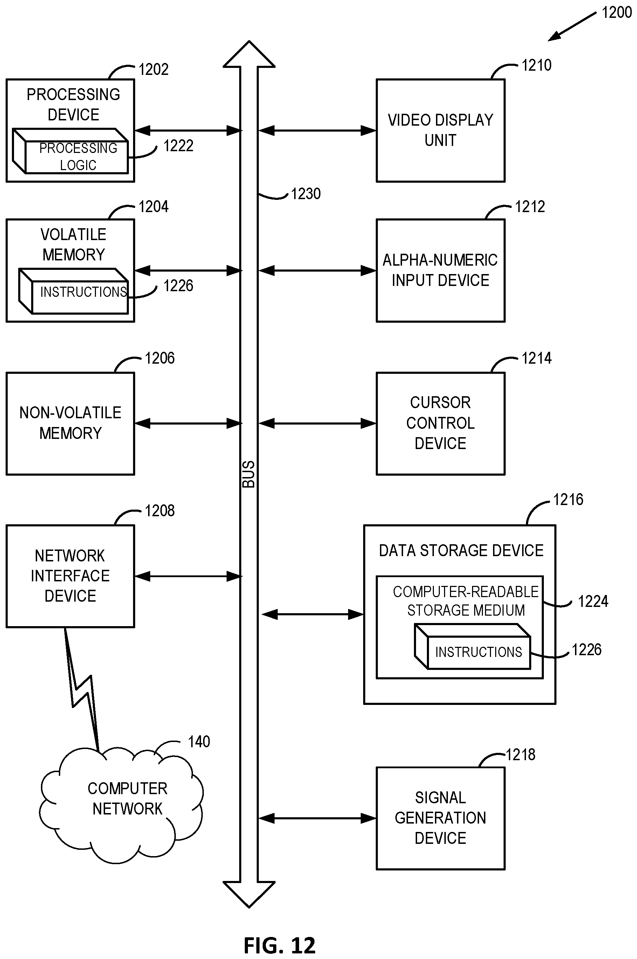

**FIG. 12** is a block diagram illustrating an example computer system 1200, in accordance with implementations of the present disclosure. The computer system can be a computing device or other device discussed herein. The computer system 1200 may include the client device 112, the task server 120, or the third-party server 130 of **FIG. 1**. The computer system 1200 can operate in the capacity of a server or an endpoint machine in an endpoint-server network environment, or as a peer machine in a peer-to-peer (or distributed) network environment. The machine can be a television, a personal computer (PC), a tablet PC, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 1200 includes a processing device 1202, a volatile memory 1204 (e.g., read-only memory (ROM), flash memory, dynamic random access memory (DRAM) such as synchronous DRAM (SDRAM), double data rate (DDR SDRAM), or DRAM (RDRAM), etc.), a non-volatile memory 1206 (e.g., flash memory, static random access memory (SRAM), etc.), and a data storage device 1216, which communicate with each other via a bus 1230.

The processing device 1202 represents one or more general-purpose processing devices such as a microprocessor, CPU, GPU, or the like. More particularly, the processing device 1202 can be a complex instruction set computing (CISC) microprocessor, reduced instruction set computing (RISC) microprocessor, very long instruction word (VLIW) microprocessor, or a processor implementing other instruction sets or processors implementing a combination of instruction sets. The processing device 1202 can also be one or more special-purpose processing devices such as an ASIC, a field programmable gate array (FPGA), a digital signal processor (DSP), network processor, or the like. The processing device 1202 is configured to execute instructions 1226 (e.g., for performing one or more of the method 400 or portions of the data flows 500-900 and 1100) for performing the operations discussed herein.

The computer system 1200 can further include a network interface device 1208. The network interface device 1208 can assist in data communication between computing devices. The computer system 1200 also can include a video display unit 1210 (e.g., a liquid crystal display (LCD) or a cathode ray tube (CRT)), an input device 1212 (e.g., a keyboard, and alphanumeric keyboard, a motion sensing input device, touch screen), a cursor control device 1214 (e.g., a mouse), and a signal generation device 1218 (e.g., a speaker).

The data storage device 1216 can include a non-transitory machine-readable storage medium 1224 (also computer-readable storage medium) on which is stored one or more sets of instructions 1226. The instructions may embody any one or more of the methodologies, functions, operations, or data flows described herein. The instructions 1226 can also reside, completely or at least partially, within the volatile memory 1204 and/or within the processing device 1202 during execution thereof by the computer system 1200, the volatile memory 1204 and the processing device 1202 also constituting machine-readable storage media. The instructions 1226 can further be transmitted or received over the computer network 140 via the network interface device 1208.

In one implementation, the instructions 1226 include instructions for on-device AI. While the computer-readable storage medium 1224 (machine-readable storage medium) is shown in an example implementation to be a single medium, the terms "computer-readable storage medium" and "machine-readable storage medium" should be taken to include a single medium or multiple media (e.g., a centralized or distributed database, and/or associated caches and servers) that store the one or more sets of instructions. The terms "computer-readable storage medium" and "machine-readable storage medium" shall also be taken to include any medium that is capable of storing, encoding or carrying a set of instructions for execution by the machine and that cause the machine to perform any one or more of the methodologies of the present disclosure. The terms "computer-readable storage medium" and "machine-readable storage medium" shall accordingly be taken to include, but not be limited to, solid-state memories, optical media, and magnetic media.

In the foregoing description, numerous details are set forth. It will be apparent, however, to one of ordinary skill in the art having the benefit of this disclosure, that the present disclosure can be practiced without these specific details. In some instances, well-known structures and devices are shown in block diagram form, rather than in detail, in order to avoid obscuring the present disclosure.

Some portions of the detailed description have been presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "obtaining," "receiving", "providing," "determining," "causing," "displaying", "selecting," "comparing," "calculating," "converting," or the like, refer to the actions and processes of a computer system, or similar electronic computing device, that manipulates and transforms data represented as physical (e.g., electronic) quantities within the computer system's registers and memories into other data similarly represented as physical quantities within the computer system memories or registers or other such information storage, transmission or display devices.

For simplicity of explanation, the method 400 and data flows 500-900 and 1100 are depicted and described herein as a series of acts. However, acts in accordance with this disclosure can occur in various orders and/or concurrently, and with other acts not presented and described herein. Furthermore, not all illustrated acts can be required to implement the methods in accordance with the disclosed subject matter. In addition, those skilled in the art will understand and appreciate that the methods could alternatively be represented as a series of interrelated states via a state diagram or events. Additionally, it should be appreciated that the methods disclosed in this specification are capable of being stored on an article of manufacture to facilitate transporting and transferring such methods to computing devices. The term article of manufacture, as used herein, is intended to encompass a computer program accessible from any computer-readable device or storage media.

Certain implementations of the present disclosure also relate to an apparatus for performing the operations herein. This apparatus can be constructed for the intended purposes, or it can comprise a general-purpose computer selectively activated or reconfigured by a computer program stored in the computer. Such a computer program can be stored in a computer readable storage medium, such as, but not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions.

Reference throughout this specification to "one implementation," "an implementation," "some implementations," "one embodiment," "an embodiment," or "some embodiments" mean that a particular feature, structure, or characteristic described in connection with the implementation or embodiment is included in at least one implementation or embodiment. Thus, the appearances of the phrase "in one implementation" or "in an implementation" or other similar terms in various places throughout this specification are not necessarily all referring to the same implementation. In addition, the term "or" is intended to mean an inclusive "or" rather than an exclusive "or." Moreover, the word "example" or a similar term are used herein to mean serving as an example, instance, or illustration. Any aspect or design described herein as an "example" is not necessarily to be construed as preferred or advantageous over other aspects or designs. Rather, use of the word "example" or a similar term is intended to present concepts in a concrete fashion.

To the extent that the terms "includes," "including," "has," "contains," variants thereof, and other similar words are used in either the detailed description or the claims, these terms are intended to be inclusive in a manner similar to the term "comprising" as an open transition word without precluding any additional or other elements.

As used in this application, the terms "component," "module," "system," or the like are generally intended to refer to a computer-related entity, either hardware (e.g., a circuit), software, a combination of hardware and software, or an entity related to an operational machine with one or more specific functionalities. For example, a component can be, but is not limited to being, a process running on a processor (e.g., digital signal processor), a processor, an object, an executable, a thread of execution, a program, and/or a computer. By way of illustration, both an application running on a controller and the controller can be a component. One or more components can reside within a process and/or thread of execution and a component can be localized on one computer and/or distributed between two or more computers. Further, a "device" can come in the form of specially designed hardware; generalized hardware made specialized by the execution of software thereon that enables hardware to perform specific functions (e.g., generating interest points and/or descriptors); software on a computer readable medium; or a combination thereof.

The aforementioned systems, circuits, modules, and so on have been described with respect to interactions between several components and/or blocks. It can be appreciated that such systems, circuits, components, blocks, and so forth can include those components or specified sub-components, some of the specified components or sub-components, and/or additional components, and according to various permutations and combinations of the foregoing. Sub-components can also be implemented as components communicatively coupled to other components rather than included within parent components (hierarchical). Additionally, it should be noted that one or more components can be combined into a single component providing aggregate functionality or divided into several separate sub-components, and any one or more middle layers, such as a management layer, can be provided to communicatively couple to such sub-components in order to provide integrated functionality. Any components described herein can also interact with one or more other components not specifically described herein but known by those of skill in the art.

It is to be understood that the above description is intended to be illustrative, and not restrictive. Many other implementations will be apparent to those of skill in the art upon reading and understanding the above description. The scope of the disclosure should, therefore, be determined with reference to the appended claims, along with the full scope of equivalents to which such claims are entitled.

## Claims

1. A method, comprising:
obtaining, at a client device, a request to perform a task;
providing the request as input to a generative artificial intelligence (AI) model operating on the client device, the generative AI model being trained to identify one or more applications capable of performing the task and to generate instructions related to the task for the one or more applications;
causing the instructions related to the task to be provided to the one or more applications;
receiving an indication of completion of at least a portion of the task; and
providing, at the client device, information regarding the completion of the at least a portion of the task.

2. The method of claim 1, wherein:
the request comprises audio data comprising speech data of a user of the client device; and
the method further comprises converting the audio data into corresponding text data, wherein providing the request as the input to the generative AI model comprises providing the corresponding text data as the input to the generative AI model.

3. The method of any preceding claim, wherein the request comprises multimodal data; and/or,
wherein the generative AI model comprises a large language model (LLM).

4. The method of any preceding claim, further comprising determining that the request complies with predetermined request safety criteria.

5. The method of claim 4, wherein determining that the request complies with the predetermined request safety criteria comprises:
providing the request to a safety criteria application executing on a computing device separate from the client device; and
obtaining an indication provided by the safety criteria application that the request complies with the predetermined request safety criteria.

6. The method of any preceding claim, wherein the instructions related to the task for the one or more applications comprise an application programming interface (API) call to an application of the one or more applications.

7. The method of any preceding claim, wherein causing the instructions to be provided to the one or more applications comprises causing at least a portion of the instructions to be provided to an application executing on a computing device separate from the client device.

8. The method of any preceding claim, further comprising:
responsive to the completion of the at least a portion of the task, receiving a result of the task.

9. The method of claim 8, further comprising:
determining that the result complies with predetermined result safety criteria; and/or,
using a quality criteria application to determine a quality of the result and responsive to the quality being below a threshold quality, causing the instructions related to the task to be provided to one or more applications executing on a computing device separate from the client device.

10. The method of claim 9, wherein determining that the result complies with the predetermined result safety criteria comprises:
providing the result to a safety criteria application executing on a computing device separate from the client device; and
obtaining an indication provided by the safety criteria application that the result complies with the predetermined result safety criteria.

11. The method of any preceding claim, further comprising:
determining, based on client device criteria, that at least a portion of the instructions can be provided to an application executing on the client device; and
causing the at least a portion of the instructions to be provided to the application executing on the client device.

12. The method of claim 11, wherein the client device criteria comprise one or more of:
the client device meeting a predetermined computing resources specification;
the client device having a predetermined status; and/or,
the client device storing data used by the application executing on the client device to perform at least a portion of the task.

13. The method of claims 11 or 12, wherein the client device criteria comprise:
the client device storing encrypted data, wherein the encrypted data, in an unencrypted state, is used to perform at least a portion of the task; and
the client device having access to one or more encryption keys used to decrypt the encrypted data.

14. A system, comprising:
a memory; and
a processing device, coupled to the memory, configured to perform the method of any preceding claim.

15. A non-transitory computer-readable storage medium including executable instructions that when executed by a processing device cause the processing device to perform the method of any preceding claim.
